# EUROPEAN PATENT APPLICATION

(11) **EP 4 789 895 A1**
(43) Date of publication of application: **12.08.2026**
(21) Application number: 25156274.0
(22) Date of filing: 06.02.2025
(51) Int. Cl.: B60L 3/00, B60L 3/12, B60L 15/00, H02M 1/32

(54) **ADAPTIVE TRACTION CONVERTER CONTROL**

(71) Applicant: Volvo Car Corporation, 405 31 Göteborg (SE)
(72) Inventor: Zhang, Chi, SE-405 31 Göteborg (SE); Negri, Riccardo, SE-405 31 Göteborg (SE)
(74) Representative: Nederlandsch Octrooibureau

(57) **Abstract**

A device for controlling a traction converter comprises a monitor unit (402) to monitor a status of at least one component of the traction converter (300) over time to generate monitoring information. An analysis module (403) determines an operating mode based on the monitoring information. A controller (401) controls the traction converter according to the operating mode. Monitoring information can be indicative of a status of a power semiconductor (S1-S6) of the traction converter, a direct current link capacitor (C_{OC}) of the traction converter, or a heatsink (302) of the traction converter.

## Description

### Technical Field

The present disclosure relates to a traction converter. The present disclosure further relates to a method of controlling a traction converter.

### Background of the Present Disclosure

Traction converters may be provided to control motion powered by an electric motor. Electric vehicles, such as cars, trucks, and trains, may comprise a traction converter. The traction converter may comprise an inverter to convert a direct current power supply into an alternating current used to power the electric motor of the electric vehicle. However, such inverters also occur in other applications to provide alternating current. Inverters are not limited to electric vehicles but can also be applied to e.g. control any electric motor.

Power modules are one of the key components installed in the traction converter of electrical machines, in particular in electrical vehicle applications. The reliability and performance of the traction converter and its power modules will greatly affect the electrical machine's performance. Each power module can pack multiple power semiconductors. Typically, in the design stage, engineers prefer to overdesign the specifications in order to guarantee both performance and lifetime of electrical machines. However, there is still a possibility that the power semiconductor in converters for electrical machines can be damaged.

The background section is merely intended to provide a contextual overview of some current issues and is not intended to be exhaustive. Other contextual information may become apparent to a person of skill in the art upon review of the following detailed description.

### Summary of the Present Disclosure

It is an object of the invention to provide an improved device for controlling a traction converter.

According to an aspect of the invention, a device is provided for controlling a traction converter, the device comprising:
a monitor unit to monitor a status of at least one component of the traction converter over time to generate monitoring information;
a mode selector unit configured to determine an operating mode based on the monitoring information; and
a traction converter controller configured to control the traction converter according to the operating mode.

The continuous monitoring of the status of the component of the traction converter over time provides information that can be used to adapt the control of the traction converter. For example, aggregated monitoring information of the status over the last period of time, allows to change the way in which instantaneous driver commands are handled. This way, if a driver exhibits aggressive driving behavior, this can be detected after some time by the mode selector unit and after that the driving commands from e.g. the accelerator pedal can be handled differently by the controller of the traction converter.

The mode selector unit may be configured to determine the operating mode for processing a particular acceleration command based on the monitoring information generated by the monitor unit during a period of time before the acceleration command was given. This allows sudden quick accelerations to be processed, but if there are too many accelerations the operating mode may switch to a safe mode to prevent failure. This period of time may be a driving session starting from the time of ignition or the time of starting driving. For example, the period of time may cover at most a certain length of time in the past, for example a period of not more than one hour in the past up to now or not more than 10 minutes in the past up to now. However, such a period is not a limitation. The mode selector unit may have access to the entire available monitoring information history.

The monitoring information may be indicative of a status of at least one of: a power semiconductor of the traction converter, a direct current link capacitor of the traction converter, and a heatsink of the traction converter. Such monitoring information is highly relevant because it allows to establish how the traction converter is burdened by the driving.

The status may comprise at least one of: an on state voltage of the power semiconductor, an on state resistance of the power semiconductor, a threshold voltage of the power semiconductor, a junction temperature of the power semiconductor, an equivalent series resistor value of the direct current link capacitor, a capacitance of the DC link capacitor, a temperature of the heatsink. Monitoring information reflecting this type of status is highly relevant because it allows to establish how the traction converter is burdened by the driving.

The mode selector unit may comprise a data analysis unit configured to classify a driving behavior of a driver of an electric vehicle comprising the traction converter, to generate a classification of the driving behavior, based on the monitoring information. Such a data analysis unit allows to classify the driving behavior. After classification has been made, it allows to operate the traction converter in a suitable manner according to the current classification of the driving behavior.

The mode selector unit may comprise a data analysis unit configured to detect an aging-related condition of at least part of the electric vehicle comprising the traction converter, to generate a classification of the condition of said at least part of the electric vehicle, based on the monitoring information. Such a data analysis unit allows to classify the condition of the components. After classification has been made, it allows to operate the traction converter in a suitable manner according to the current classification of the condition of the components.

The data analysis unit may comprise an artificial intelligence model trained to detect the classification of the driving behavior or the aging-related condition, based on the monitoring information. Such an artificial intelligence model, for example, an artificial neural network model, is a very powerful analysis tool that can perform the classification with great efficiency and finesse.

The artifice intelligence model may be a model that has been trained by pre-classified data collected using a simulation or a test vehicle. Generating data using simulation techniques and/or a test vehicle equipped with the health monitor unit is a highly effective manner to train the artificial intelligence model. Ground truth classifications may be provided by manual annotation of the data to generate the pre-classified data. An artificial intelligence model trained on this kind of data can perform the described classifications with accuracy.

The data analysis unit may be configured to: distinguish between a classification corresponding to a normal driving condition and a classification corresponding to an aggressive driving condition, or distinguish between a classification corresponding to a normal condition of an electric component and a classification corresponding to an aged condition of the electric component. Such distinctive classifications allow to adapt the control of the traction converter for each different situation, to prevent damage when needed while allowing powerful responses when possible.

The drive behavior analysis unit may be configured to activate a safe mode in case the aggressive driving condition or the aged condition is detected, wherein the safe mode limits at least one control parameter of the traction converter or the traction converter controller in comparison to a normal mode. The safe mode helps prevent failure of the components of the electric vehicle, in particular the traction converter.

The mode selector unit may be configured to, during the safe mode, perform at least one of: increase a flow rate of a coolant to cool the traction converter compared to the normal mode; reduce a torque generated by an electric motor or reduce a current output by the traction converter compared to the normal mode; reduce a traction converter loss by increasing a voltage change or a current change of at least one power semiconductor of the traction converter when switching. It was found that failure may be decreased and durability may be increased by means of at least one of these interventions.

According to another aspect of the invention, a method of controlling a traction converter is provided. The method comprises monitoring a status of at least one component of the traction controller over time to generate monitoring information; determining an operating mode based on the monitoring information; and controlling the traction converter according to the operating mode.

The person skilled in the art will understand that the features described above may be combined in any way deemed useful.

### Brief Description of the Drawings

The present disclosure will be described in further detail hereinafter with reference to the drawings. Similar items may be indicated by the same reference numerals throughout the drawings. The drawings are diagrammatic and may not be drawn to scale.
FIG. 1 shows a power semiconductor package.
Fig. 2. shows a DC link capacitor
Fig. 3 shows a diagram of a traction converter in accordance with the present disclosure.
Fig. 4 shows a diagram illustrating aspects of a control architecture for a traction converter.
Fig. 5 illustrates different basic data types for different driving conditions.
Fig. 6 illustrates different basic data types for different long-term driving conditions.
Fig. 7 shows a diagram illustrating aspects of control logic management based on different data types.
Fig. 8 shows a diagram illustrating aspects of training a learned model for analyzing driving conditions.

### Detailed Description

Certain exemplary embodiments will be described in greater detail, with reference to the accompanying drawings. The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail.

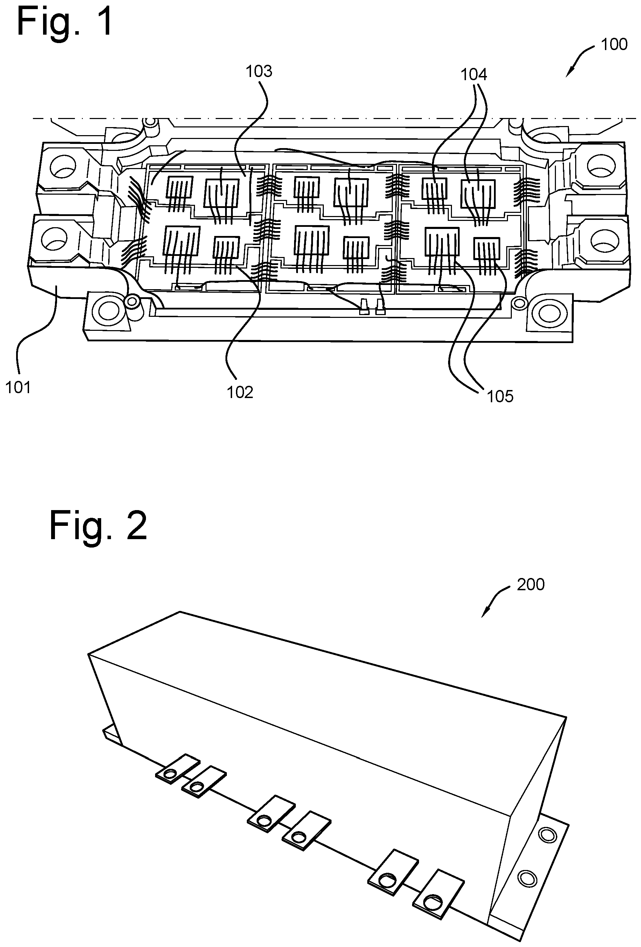

Fig. 1 shows a typical example of a power module 100. The power module 100 has a package with a case 101 made of an electrically insulating material, such as ceramics. On the insulating surface 102 of the case 101, an electrically conductive layer 103, preferably made of a metal, such as copper, forms pathways for the flow of electricity. The power semiconductors 104 are fixed to the insulating surface 102 or to the electrically conductive layer 103. Moreover, their terminals may be connected to appropriate portions of the electrically conductive layer 103 by means of bonding wires 105.

The power module 100, packing multiple power semiconductors 104, is one of the key components installed in the traction converter for electrical machines, in particular in electrical vehicle applications. Its reliability performance heavily affects the electrical vehicles' performance characteristics. Typically, in the design stage, engineers prefer to perform overdesign specifications in order to guarantee both performance and lifetime of electrical vehicles. However, the driving behavior of drivers in reality is highly variable due to personal preferences, and can never be fully predicted. This means there is still high possibility that the power semiconductor 104 in converters for electrical machines can be damaged due to some unpredicted driving profile, such as aggressive drivers.

Typically, such aggressive drivers typically launch quite high torque commands to the electrical propulsion system of the electrical vehicle frequently. High torque brings high current flowing through the power semiconductors 104, which results in high temperature inside the power module 100 for power semiconductor as shown in Fig. 1. With the help of bonding wires 105, copper, ceramics, and other different materials and bonding techniques such as soldering and sintering, the power semiconductors 104 can be packaged inside a customized case 101. Since there are different materials, there will be stress generated due to the different coefficients of thermal expansion (CTE) of the different materials. This kind of stress may bring damage to not only the power semiconductors 104 but also to the bonding wires 105, the conductive layer 103, the ceramics, and other materials. After too much aggressive use, failure may happen.

Apart from the power semiconductor 104, there are other critical components inside a traction converter, which are vulnerable to fail due to unexpected mission profile, such as a direct current (DC) link capacitor 200, an example of which is shown in Fig. 2.

Nowadays, in order to achieve a highly reliable design, overdesign or oversizing of these key components is widely used. For instance, derating of lifetime consumption of power semiconductors may be set to 30%, which results in higher cost and bulky design. Furthermore, this oversizing or overdesign can still not solve the problem or failure due to unpredicted driving behavior in reality.

According to an aspect of the present disclosure, the key physics parameters of key components inside the traction inverter may be monitored, for example with the help of artificial intelligence (AI), to mitigate the risk of early failure due to overburdening. This way, overdesign or oversizing of components, such as power semiconductors, may be avoided. Meaning, the power semiconductors may have reduced capacity, which may lead to cost reduction and more compact designs. Moreover, it is possible to flexibly adjust traction converter control modes to avoid failure or damage due to unpredicted driving behaviors. Moreover, in certain embodiments, possible failure dates of power semiconductors may be predicted so that alerts for maintenance may be generated and/or sent. Moreover, the reliability and/or durability of the traction converter, and of the electric machine as a whole, may be improved.

Key parameters of critical components inside the traction inverter may be monitored to predict one or both of the state of the traction converter and the driving behavior, with the help of AI. Based on the analyzed data results, different control modes may be adopted for traction converter control.

In this way, the designed traction converter design marge can be reduced, which may lead to lower cost of materials in the electric machine. Furthermore, the traction converter is provided with an enhanced capability of handling all kinds of driving behaviors without requiring overdesign or oversizing of components. A safer, more reliable product can be achieved with lower cost.

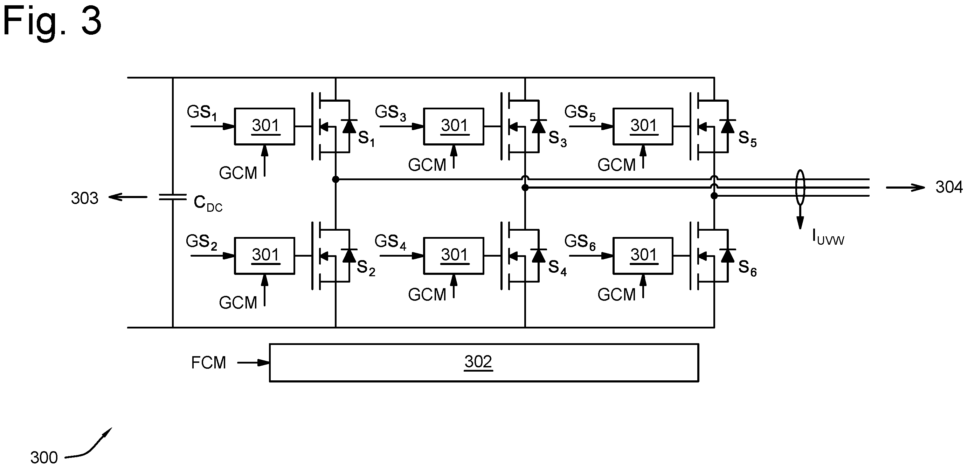

Fig. 3. Shows a diagram of a traction converter 300. The diagram shows the electrical components and connections, omitting details of physical reality, such as a ceramic casing and copper layers. The traction converter 300 has switches S1 to S6 that are connected in an arrangement that is typical for traction converters for electric motors. The traction converter 300 converts DC power from a DC power source 303, such as a battery, into AC power for an electrical machine 304. The switches S1 to S6 are controlled by gate drives 301. Moreover, a traction converter cooling system 302 is a heat sink that removes excessive heat from the traction converter. In certain embodiments, the cooling system 302 may also cool other components, such as the electric machine.

Fig. 3 shows an example system architecture for a traction converter using three phase two level topology. This topology has six power semiconductor switches S1 to S6, with six independent gate drives 301. And there is a DC link capacitor - CDC on the DC side. The topology outputs a 3-phase alternating current I_{UVW} at AC output 304.

The techniques disclosed herein, for system monitoring and adaptive control of the traction converter, also apply to any other suitable traction converter topology, such as I-Type Neutral Point Clamped (INPC), Active Neutral Point Clamped (ANPC), orT-Type neutral Point Clamped (TNPC). Preferably, the topology has the same or a similar function as the three phase two level topology.

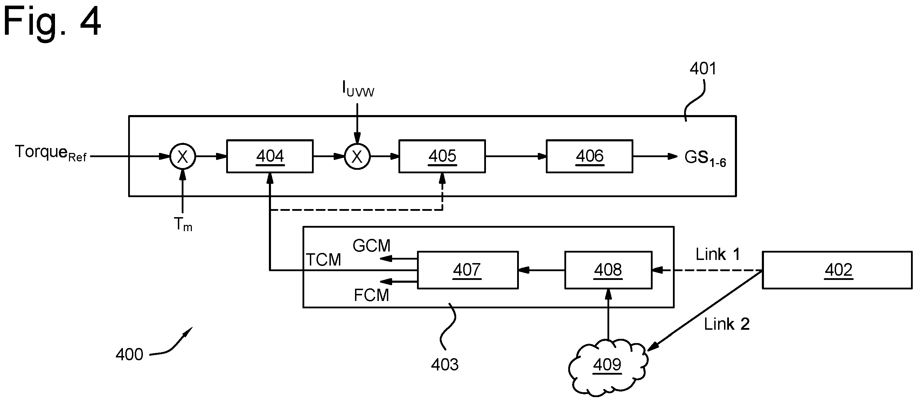

Fig. 4 shows a diagram of an adaptive traction converter control system 400. The adaptive traction converter control system comprises a traction converter controller 401, a health monitor unit 402, a mode selector unit 403. Optionally, the adaptive traction converter control system 400 communicates with a cloud server 409 for data storage, data retrieval, and/or data analysis.

The traction converter controller 401 comprises, in the shown example, inputs for receiving a reference torque Tref and an electrical machine torque Tm, which are combined and processed by a torque controller 404. The output of the torque controller 404 is combined with the output current luvw of the traction converter 300. The resulting combined value is processed by current controller 405. The output of current controller 405 is processed by pulse width modulator (PWM) unit 406. The output of PWM unit 406 is sent as signals GS1 to GS6 to the gate drivers 301. A traction converter controller for a traction converter is known in the art per se to provide torque and current control. However, the operation of the traction converter controller 401 and/or of the traction converter 300 itself are dynamically adjusted by the mode selector unit 403. Moreover, parameters of the traction converter 300 and/or of the electric machine 304 and/or of the vehicle's user interface elements, such as gas pedal, brake, gear, and/or steering wheel, are monitored by health monitor unit 402.

The health monitor unit 402 may comprise both hardware and software. The health monitor unit 402 may be configured to monitor the status (both the health and the operating) of one or more key components, such as power semiconductor module S1 to S6, DC link capacitor C_{DC}, and other components.

Regarding the power semiconductors S1 to S6, several parameters can be measured and monitored. Measurement data is generated by the respective sensor or detector. The measurement data is sent from the respective sensor or detector to the health monitor unit 402. For example, an on state voltage (VDSon) of the power semiconductor, an on state resistance (RDSon) of the power semiconductor, a threshold voltage (Vth) of the power semiconductor, and/or a junction temperature (Tj) of the power semiconductor may be measured. Voltages can be measured by a voltage detector. Resistance can be measured by a resistance detector. Such voltage and resistance detectors are known in the art per se. Junction temperature can be measured by a thermometer.

Regarding the DC link capacitor C_{DC}, an equivalent series resistor value (ESR) of the DC link capacitor or a capacitance (CDC) of the DC link capacitor can be measured. These properties can be measured for example using an LCR meter or an impedance analyzer.

Regarding the cooling system, a temperature of the heatsink, and a heat transfer of the heatsink may be measured. The temperature can be measured by a thermometer. An indication of the heat transfer can be calculated, for example, based on the temperature of cooling fluid before and after going through a heat exchanger (not illustrated), possibly in combination with a flow speed of the cooling fluid.

The health monitor unit 402 may be configured to receive signals indicative of the desired quantities from the respective sensors. Moreover, the health monitor unit 402 may be configured to perform certain calculations on the received signals to generate important information about parameters and status associated with the traction converter 300. The health monitor unit 402 may be configured to store the collected data (received and/or calculated data), in an internal memory. Alternatively, the health monitor unit 402 may be configured to upload the collected data to a remote server (e.g. cloud server 409). Moreover, the health monitor unit 402 may be configured to transmit the data to the mode selector unit 403. Also, the health monitor unit 402 may be configured to make the data available to the mode selector unit 403 by means of a shared memory or an application programming interface.

Thus, the results obtained by the health monitor unit 402 may be received by the mode selector unit 403 through any one or both of two links:
Link 1: direct link. Data acquired by health monitor unit 402 can be sent to the mode selector unit 403 in a real time way. The algorithms, such as artificial intelligence based algorithms, used in the data analysis performed by the mode selector unit 404, can be executed in real time based on the incoming data.
Link 2: indirect link. Data acquired by the health monitor unit 402 can be uploaded to "cloud" first. Alternatively, the data can be stored in a local memory (not illustrated). The mode selector unit 403 can download the data from the cloud or local memory and perform the analysis.

The mode selector unit 403 is configured to perform analysis of the measured data. This analysis may evaluate key components of the measured data, to extract the behavior of the driver. Based on the behavior of the driver, different control modes may be activated to optimize the traction converter performance.

For example, three basic control modes may be considered: gate control mode (GCM), torque control mode (TCM), and flow control mode (FCM).

In gate control mode (GCM), the mode selector unit 403 connects with one or more or all of the gate drivers 301 of the respective power semiconductors S1 to S6, and adjusts the operating mode of the gate drivers 301.

In traction control mode (TCM), the mode selector unit 403 connects with the traction converter control unit 401 and modulate output current or torque of the traction converter by modulating the control signals GS1 to GS6 sent from the traction converter control module 401 to the gate drivers 301. Whereas in the gate control mode (GCM), a separate signal is sent from the mode selector unit 403 to the gate drivers 301 to adapt the behavior of the gate drivers 301 to the currently selected drive mode, in the traction control mode (TCM) a signal is sent from the mode selector unit 403 to the traction converter control unit 401, which then alters the driving signals GS1 to GS6 of the gate drivers 301.

In flow control mode (FCM), the mode selector unit connects with the traction converter cooling system 302 to modulate the coolant flowrate. This way, cooling capacity can be increased in certain situations.

The flow control mode (FCM) may be used to adjust flow rate of coolant for the traction converter. For instance, if the mode selector unit 403 selects a mode corresponding to mild driving behavior, coolant flowrate can be reduced. If the mode selector unit 403 selects a mode corresponding to an aggressive driving behavior, coolant flowrate is increased. And if the mode selector unit 403 selects a mode corresponding to aging traction converter 300 (meaning that the traction converter 300 is almost reaching its lifetime), a maximum flowrate is used to ensure safety. The mode selector unit 403 thus sends a signal indicative of these modes/flowrates to the cooling system 302, and the cooling system 302 is configured to adapt its flow rate in accordance with the received signal.

The torque control mode (TCM) can be used to adjust the output torque setting of the torque control 404 of the traction converter control unit 401, and thereby adjust the output current I_{UVW} of the traction converter 300. For instance, if the mode selector unit 403 selects a mode corresponding to mild driving behavior, there is no need to limit the output torque or current I_{UVW}. The torque controller 404 can be configured to, if the mode selector unit 403 selects a mode corresponding to an aggressive driving behavior, enforce an upper limit for the torque or the current I_{UVW}. And if the mode selector unit 403 selects a mode corresponding to an approaching end-of-life of the traction converter 300, the torque controller 404 can be controlled to limit the torque and/or the current I_{UVW} to an even lower value to limit the power of traction converter to a relatively low value to ensure safety.

The gate control mode (GCM) may be used to adjust the gate drive control mode of the gate drivers 301 of the power semiconductor modules GS1 to GS6. For instance, if the mode selector unit 403 selects a mode corresponding to mild driving behavior, the gate drivers 301 do not need to be adjusted and can operate normally. If the mode selector unit 403 selects a mode corresponding to an aggressive driving behavior, the mode selector unit 403 may be configured to control the gate drivers 301 to operate in an adaptive gate drive mode. This adaptive gate drive mode allows the control of dv/dt (change rate of voltage) and/or di/dt (change rate of current) to have a smaller traction converter loss. And if the mode selector unit 403 selects a mode corresponding to an approaching end-of-life of the traction converter 300, no adjustment on gate drive mode needs to be made.

It will be understood that the precise actions in each mode may be implemented differently in alternative embodiments. The modes described above may be relatively rudimentary. However, the logic can be made more high-fidelity based on the fidelity of the Al algorithm being used.

For instance, in case of decreasing or increasing coolant flowrate, the step size is flexible and can be adjusted based on the applied Al algorithm that is used. A similar methodology applies to TCM and GCM.

With the adaptive control of the traction converter 300, overdesign is not necessary for reliability and/or durability of key components inside the traction inverter, since these key components' status has been monitored and linked to traction converter control. In case of any unexpected mission profile or lifetime reached, proper control can be applied by the mode selector unit 403, to ensure safety.

In different embodiments, the health monitor unit 403 may be configured to collect different types of data representing different parameters of the traction converter. For example, the following parameters can be monitored in real-time, for example by a sensor configured to detect the parameters with a sufficiently high frequency. The measurement frequency preferably is sufficiently high to detect maxima and minima of the varying measured parameter over time.

The following are examples of instantaneous parameters that may be measured:
- On state voltage of the power semiconductors S1 to S6: VDS_{ON}
- Junction temperature: T_{J}
- DC link capacitor temperature: T_{CDC} (in particular the temperature of capacitor C_{DC})
- DC link ripple current: I_{CDC} (in particular the current provided by the DC power source 303 at the input of the traction converter 300).

These "instantaneous" parameters may be measured at a relatively high frequency in view of their highly varying nature.

The following are examples of long-term parameters that may be measured:
- Threshold voltages of the power semiconductors S1 to S6: V_{TH}
- On state resistance of the power semiconductors S1 to S6: RDS_{ON}
- Thermal resistance of e.g. the power semiconductors S1 to S6: R_{TH}
- Capacitance value of DC link capacitor: C_{DC}
- Equivalent series resistor value of DC link capacitor: ESR

These "long-term" parameters may be measured at a relatively low frequency, for example once daily. Certain parameters may even be measured at times when the traction converter 300 is idle.

In the above description of parameters, the "DC link capacitor" may be, for example, the capacitor C_{DC} of Fig. 3.

In the following, a simplified example will be described, in which three basic data types can be identified. More or alternative data types can be identified in alternative embodiments, for example with higher granularity (mild - medium - aggressive driving can be categorized in any number of levels of mild/aggressiveness). Moreover, different types of 'aggressive' behavior may be distinguished by the mode selector unit 403, which may lead to different adaptations of the control of the traction converter.

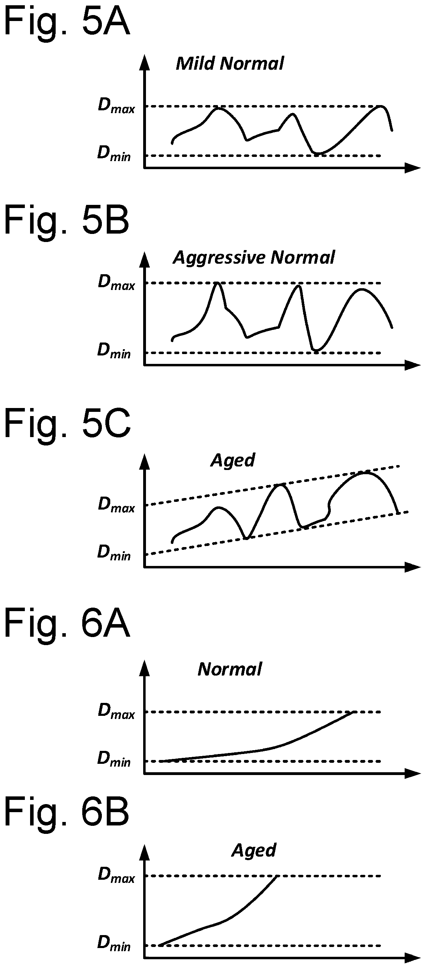

Fig. 5 shows examples of three different basic data types. These data types can be distinguished based on some or all of the instantaneous measured parameters. To determine the data type, the data analysis unit 408 of the mode selector unit 403 may be configured to determine the data type based on the monitoring information generated by the monitor unit during a period of time in the past. For example, the last half hour may be taken into account, or the last 15 minutes or any suitable period up to now, before a particular acceleration command is given, for example by pressing on the acceleration pedal of the vehicle. The drive behavior analysis unit 407 of the mode selector unit 403 then uses the operating mode corresponding to the data type determined based on the data up to the given period into the past, to process the current acceleration command.

This allows sudden quick accelerations of an otherwise calm behaving driver to be processed in unlimited fashion, but if there are too many accelerations corresponding to an aggressive driving behavior, the operating mode may switch to a safe mode, limiting the response to acceleration commands to prevent failure. The period of time taken into account by the data analysis unit 408 may be a current driving session starting from the time of ignition or the time of starting driving. In certain embodiments, the period of time taken into account may cover at most a certain length of time in the past, for example a period of not more than one hour in the past up to now or not more than 10 minutes in the past up to now. However, such a period is not a limitation. The mode selector unit 403 may have access to the entire available monitoring information history, and the data analysis unit 408 can use all the data to determine the current data type.

Three diagrams are shown, each diagram showing a plot of a parameter in an arbitrary unit (vertical axis) over time (horizontal axis). As shown, in each plot the parameter varies between a minimal value Dₘᵢₙ and a maximum value Dₘₐₓ. These minimal and maximum values, as well as the frequency of the variations of the parameter over time, may be established by the data analysis module 408 of the mode selector unit 403.

Fig. 5A illustrates a mild normal data type (datatype 1). In this case, data values are changing between Dmax and Dmin with slow changing slope. Dmax-Dmin is within a relatively small range and Dmax is below a maximum allowed limit.

Fig. 5B illustrates an aggressive normal data type (datatype 2). In this case, data is changing between Dmax and Dmin with faster changing slope. Dmax-Dmin is within a relatively big range. In certain cases, Dmax may be above the maximum above limit.

Fig. 5C illustrates an aged data type (datatype 3). In this case, the data has similar trends compared to Mild Normal or Aggressive Normal. However, the maximum value Dmax and the minimum value Dmin is drifting (in this case increasing) in a relatively fast slope. This drift of the minimal and/or maximal values is indicative of deteriorating component(s).

More data types can be generated to achieve a more high control fidelity.

Fig. 6 shows examples of two basic data types for 'long-term' parameters. The axes are the same as in Fig. 5, although the curves may represent a different parameter (long-term rather than instantaneous). In this example, two basic types are distinguished.

Fig. 6A illustrates a normal datatype (datatype 1). Since the slope of the curve is relatively flat, it seems the traction converter is in good condition.

Fig. 6B illustrates an aged data type (datatype 3). Since the slope of the curve is relatively steep, it seems that the traction converter is in bad condition, and may be deteriorating.

More data types can be generated for long-term parameters, to achieve a more high control fidelity.

Algorithms to analyze the data may include artificial intelligence algorithms, such as deep reinforcement learning and/or adaptive filtering.

Based on the data type detected by the data analysis module 408, the driver behavior analysis module 407 will select a proper control scheme.

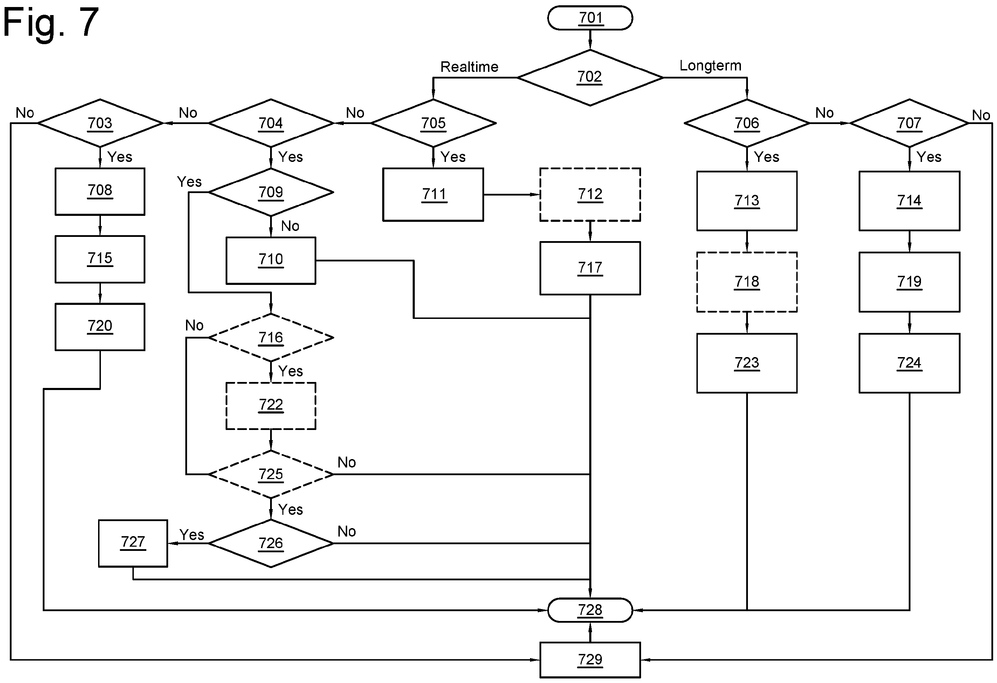

Fig. 7 shows a flowchart illustrating an example of selecting a control scheme based on the detected data type. In certain embodiments, the blocks with dashed borders are only activated if power semiconductor module is monitored.

As shown, the process of selecting a control scheme may start at block 701.

In step 702 it is decided whether to analyze long term parameters or instantaneous parameters. Note that both types of parameters can be analyzed at the same time.

For long term parameters, it is checked whether the datatype is datatype 1 (step 706) or datatype 2 (step 707). For datatype 1, in step 713 the TCM mode may be disabled, to disable torque limited control mode. In step 718, the GCM mode may be disabled, to disable adaptive gate drive control. In step 723, the flowrate can be set to a normal flowrate. Then the process ends in step 728 and can be repeated from step 701.

For datatype 2, in step 714 TCM mode may be enabled to enable torque limited control mode, in which the torque is reduced compared to normal mode. In step 719, FCM may be activated to increase the flowrate of the cooling fluid of the cooling system 302 to a predetermined maximum value. In step 724, an alert is generated indicating that the lifetime is reached. This alert may be generated in the driver dashboard. Alternatively, a signal may be transmitted via a communications network to a service station for cars. Then the process ends in step 728 and can be repeated from step 701.

For instantaneous parameters, it is checked whether the datatype is datatype 1 (step 705), datatype 2 (step 704), or datatype 3 (step 703). For datatype 1, in step 711 TCM may be disabled to disable the torque limited control mode. Moreover, in step 712 the GCM may be disabled to disable adaptive gate driver control. In step 717 FCM may be controlled to reduce the flowrate to a normal rate. Then the process ends in step 728 and can be repeated from step 701.

For datatype 2, it is checked in step 709 whether the cooling fluid flowrate has reached its maximum value. If the maximum is not reached yet, in step 710 the flowrate is increased and then the process ends in step 728 and can be repeated from step 701. However, if the maximum has been already reached, it is checked in step 716 whether GCM is inactive. If it is inactive, in step 722 GCM is activated to enable adaptive gate driver control and then the process ends in step 728 and can be repeated from step 701. However, if GCM was not inactive in step 716, in step 725 it is checked whether the fastest switching speed of the switches S1 to S6 has been reached. If the maximum speed has not been reached, the process ends in step 728 and can be repeated from step 701. However, if the maximum speed has been reached in step 725, it is checked whether TCM is inactive in step 726. If TCM is not inactive, the process ends in step 728 and can be repeated from step 701. However, if TCM is inactive in step 726, in step 727 TCM is enabled to enable torque limited control mode and then the process ends in step 728 and can be repeated from step 701.

For datatype 3, in s tep 708 TCM is enabled to enable torque liited control mode. Moreover, FCM is set to increase the flowrate of the cooling liquid to a maximum. Moreover, "lifetime reached" is reported as described above in relation to step 724. Then the process ends in step 728 and can be repeated from step 701.

By the "algorithm" I meant the steps you take to train the AI. I assume the mathematics of the neural network itself is a given. But I feel I am missing something in the training process of the Al.

If the datatype is none of longterm datatype 1, longterm datatype 2, instantaneous datatype 1, instantaneous datatype 2, and instantaneous datatype 3, no action is taken in step 729 and the process ends in step 728 and can be repeated from step 701.

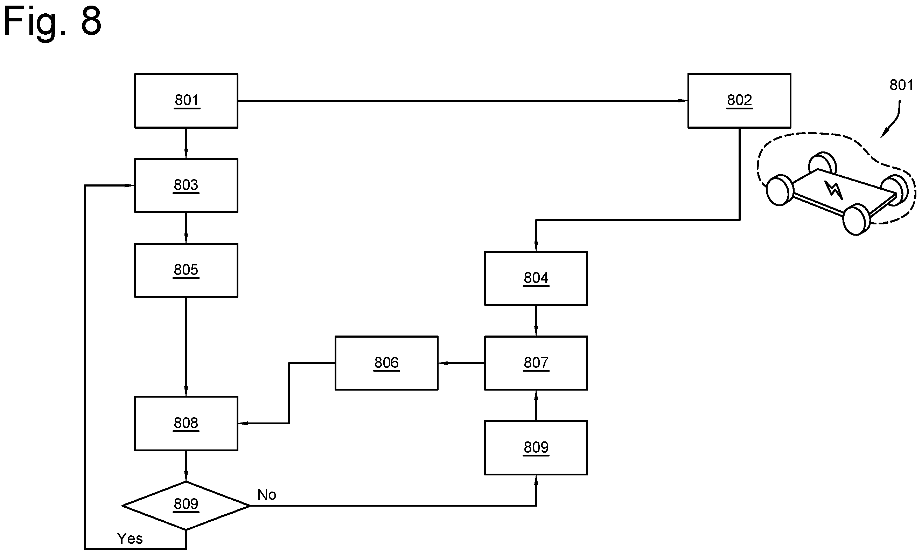

Fig. 8 shows a flowchart illustrating aspects of a training process to train the AI to detect the data type. Road collective data 801 is collected from the real road condition using a test vehicle 801 that contains the health monitor unit 402, 802, 804, a traction converter controller 401, and a traction converter 300. Different cases are run in both simulation sessions 803 and real vehicles 801. In simulation 803, it is known beforehand which data type it will be (for example N test cases for normal, N test cases for aggressive driving, and N cases for age-related components, wherein N is a positive integer number, although the number of cases may vary for different data types), so that the ground truth can be used to train the Al. And in the test vehicles 801, the test driver can be instructed to perform certain driving behavior. So also in that case ground truth for the data types is available. The health monitor unit hardware 802 and health monitor unit software 804 provides the measured data for the measured parameters, such as for example TJ, RDSON. Moreover, the initial version of the Al algorithm used in the data analyzing algorithm 807 will generate a data type based on the data provided by the health monitor unit software 804. Human analysts can review the data types output by the data analyzing algorithm 807 resulting from the from simulation and test vehicles. In step 808, data types 805 obtained from simulation are compared to data types 806 obtained from the test vehicle, and in step 809 it is decided whether the found data types are sufficiently aligned between the simulation and test vehicle. Based on the comparison results, it is decided in step 809 whether to update the data analyzing algorithm (AI) in step 809, or to continue testing by generating more simulation results in step 803, or to terminate the training process if the results are satisfactory. By running and comparing all the data from road collective data, the Al algorithms used in data analyzing algorithms will become gradually trained.

So, the training data for the Al for the different data types may be generated using both simulation and test vehicles. In simulation, the information RDSON, TJ and other parameters may be obtained reliably without any noise or other interference. Also, the human analyst may define which data is of the normal, aggressive and aging related data type. The results coming from the simulation may be used to keep updating the Al algorithms.

In certain embodiments, the Al algorithm is only used to identify the data types: for example, normal, aggressive or aging related mode. In certain embodiments, the AI does not decide how the control is modified when each data type is detected. The control changes (for example, whether to reducing torque, or whether to increase cooling, etc) may be programmed beforehand by the engineer. In certain embodiments, also the control changes may be proposed by artificial intelligence based on big data analysis.

The above detailed description describes three example patterns in the measured data that can be detected (normal, high variance (or 'aggressive'), slope (or `age related')). However, the three data types represent an idealized simplification. In reality, the measured signal will contain a lot of noise and may have a lot of variation due to, among others, different characteristics and moods of drivers and different components that may deteriorate in different ways. A well trained Al allows to identify different data types in a more efficient way with less dependence on hardware. This leads to a timely intervention, which increases safety and reliability.

The techniques described herein may be implemented at least in part in software. For example, the health monitor unit 402 may comprise a hardware part 802 and a software part 804. The hardware part may comprise sensors to detect certain physical properties as described herein. The hardware part may further comprise a computer processor and computer memory loaded with software to perform the functions described herein. The computer memory may further be configured to store the generated monitoring information. Also the mode selector unit 403 may comprise hardware and software. For example, the mode selector unit 403, including the drive behavior analysis module 407 and the data analysis module 408, may share the same computer hardware, including computer processor and computer memory, with the health monitor unit 402. The drive behavior analysis module 407, the data analysis module 408, and the health monitor unit 402 may comprise different software modules, each with a different set of computer instructions. Moreover, the hardware part may include a communications module to communicate with a remote server, such as a cloud server, using a data communication protocol.

The software, in form of a computer program product, may comprise a computer program stored on a non-transitory computer-readable media. Also, the computer program may be represented by a signal, such as an optic signal or an electro-magnetic signal, carried by a transmission medium such as an optic fiber cable or the air. The computer program may partly or entirely have the form of source code, object code, or pseudo code, suitable for being executed by a computer system. For example, the code may be executable by one or more processors.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A device for controlling a traction converter, the device comprising:
a monitor unit (402) to monitor a status of at least one component of the traction converter (300) over time to generate monitoring information;
a mode selector unit (403) configured to determine an operating mode based on the monitoring information; and
a traction converter controller (401) configured to control the traction converter (300) according to the operating mode.

2. The device according to claim 1, wherein the mode selector unit (403) is configured to determine the operating mode for processing a particular acceleration command based on the monitoring information generated by the monitor unit (402) during a period of time before the acceleration command was given.

3. The device according to claim 1, wherein the monitoring information is indicative of a status of at least one of:
a power semiconductor (S1-S6) of the traction converter (300),
a direct current link capacitor (C_{DC}) of the traction converter (300), and
a heatsink (302) of the traction converter (300).

4. The device according to claim 2, wherein the status comprises at least one of:
an on state voltage (VDSon) of the power semiconductor (S1-S6), an on state resistance (RDSon) of the power semiconductor (S1-S6), a threshold voltage (Vth) of the power semiconductor (S1-S6), a junction temperature (Tj) of the power semiconductor (S1-S6),
an equivalent series resistor value (ESR) of the direct current link capacitor (C_{DC}), a capacitance of the DC link capacitor (C_{DC}),
a temperature of the heatsink (302).

5. The device according to any one of the preceding claims, wherein the mode selector unit (403) comprises a data analysis unit (408) configured to classify a driving behavior of a driver of an electric vehicle (801) comprising the traction converter (300), to generate a classification of the driving behavior, based on the monitoring information.

6. The device according to any one of the preceding claims, wherein the mode selector unit (403) comprises a data analysis unit (408) configured to detect an aging-related condition of at least part of the electric vehicle (801) comprising the traction converter (300), to generate a classification of the condition of said at least part of the electric vehicle, based on the monitoring information.

7. The device according to claim 5 or 6, wherein the data analysis unit (408) comprises an artificial intelligence model trained to detect the classification of the driving behavior or the aging-related condition, based on the monitoring information.

8. The device according to claim 7, wherein the artifice intelligence model is a model that has been trained by pre-classified data collected using a simulation or a test vehicle.

9. The device according to any one of claims 5 to 8, wherein the data analysis unit (408) is configured to:
distinguish between a classification corresponding to a normal driving condition and a classification corresponding to an aggressive driving condition, or
distinguish between a classification corresponding to a normal condition of an electric component and a classification corresponding to an aged condition of the electric component.

10. The device according to any one of claims 5 to 9, wherein the drive behavior analysis unit (407) is configured to activate a safe mode in case the aggressive driving condition or the aged condition is detected, wherein the safe mode limits at least one control parameter of the traction converter (300) or the traction converter controller (401) in comparison to a normal mode.

11. The device according to claim 10, wherein the mode selector unit (403) is configured to, during the safe mode, perform at least one of:
increase a flow rate of a coolant to cool the traction converter (300) compared to the normal mode;
reduce a torque generated by an electric motor or reduce a current output by the traction converter (300) compared to the normal mode;
reduce a traction converter loss by increasing a voltage change or a current change of at least one power semiconductor (S1-S6) of the traction converter (300) when switching.

12. A method of controlling a traction converter, the method comprising:
monitoring a status of at least one component of the traction controller (300)over time to generate monitoring information;
determining an operating mode based on the monitoring information; and
controlling the traction converter (300) according to the operating mode.
